# DEMANDE DE BREVET EUROPEEN

(11) **EP 4 195 463 A1**
(43) Date de publication de la demande: **14.06.2023**
(21) Numéro de dépôt: 22210132.1
(22) Date de dépôt: 29.11.2022
(51) Int. Cl.: H02K 5/22, H02K 11/30, H02K 5/14

(54) **INTERCONNECTEUR POUR MACHINE ÉLECTRIQUE**

(30) Priorité: 08.12.2021 FR 2113145
(71) Demandeur: VALEO EQUIPEMENTS ELECTRIQUES MOTEUR, 94046 Créteil Cedex (FR)
(72) Inventeur: FALGUIER, Manuel, 94046 CRETEIL CEDEX (FR); HENNEGUET, Romain, 62630 Etaples-sur-Mer (FR)
(74) Mandataire: Valeo Powertrain Systems

(57) **Abrégé**

La présente invention concerne un interconnecteur (51, 25) pour machine électrique configuré pour réaliser la connexion électrique entre une partie machine et un ensemble électronique (30) de la machine électrique comportant une carte (50) de circuit imprimé, l'interconnecteur (51, 25) étant formé par un connecteur (51) de l'ensemble électronique (30) configuré pour recevoir au moins une broche (25) de la partie machine.

## Description

La présente invention concerne une machine électrique et plus particulièrement l'interconnecteur entre la partie électronique et la partie machine d'une machine électrique.

Une machine électrique tournante est un dispositif électromécanique, préférentiellement polyphasé, et permettant de convertir une énergie électrique en une énergie mécanique, ou inversement.

De manière connue, la machine électrique tournante comprend un ensemble électronique qui alimente le rotor et le stator en courant ce qui permet un pilotage optimal de la machine électrique. La liaison entre l'ensemble électronique et la machine électrique est réalisée avec des grilles de connexion. Une extrémité des grilles de connexion est fixée à la carte de circuit imprimé de l'ensemble électronique et une extrémité est vissée au porte-balai de la machine électrique. Ces deux fixations imposent des contraintes de conception. En effet, il est nécessaire de prévoir une ouverture dans la carte de circuit imprimé pour le passage d'une visseuse, et une zone sans composant au niveau de la fixation à la carte imprimée lors par exemple d'une brasure. Cela limite la zone fonctionnelle de la carte imprimé et l'espace pour des composants.

La présente invention a donc pour objet de pallier un ou plusieurs des inconvénients des dispositifs de l'art antérieur en proposant un système d'interconnexion entre la partie électronique et la partie machine d'une machine électrique amélioré.

Pour cela la présente invention propose un interconnecteur pour machine électrique configuré pour réaliser la connexion électrique entre une partie machine et un ensemble électronique de la machine électrique, l'interconnecteur étant formé par un connecteur de l'ensemble électronique configuré pour recevoir au moins une broche de la partie machine.

Selon un mode de réalisation l'interconnecteur est formé par un connecteur de l'ensemble électronique configuré pour recevoir au moins une broche de la partie machine et comportant une partie mobile.

Selon un mode de réalisation de l'invention, la broche est portée par un porte balai de la partie machine électrique.

Selon un mode de réalisation de l'invention, le connecteur est fixé à une carte de circuit imprimé par collage.

Selon un mode de réalisation de l'invention, le connecteur comporte deux parties, une première partie est fixée sur la carte de circuit imprimé de façon à être en vis à vis avec une broche du porte balai, une deuxième partie est insérée dans la première partie de façon à être en contact d'une part avec la carte de circuit imprimé et d'autre part avec une broche du porte balai.

Le fait que la deuxième partie 53 soit mobile permet d'ajuster et optimiser l'assemblage des deux parties.

Selon un mode de réalisation de l'invention, la deuxième partie est formé d'un socle dans lequel est inséré au moins un élément de connexion configuré de façon à être en contact d'une part avec la carte de circuit imprimé et d'autre part avec au moins une broche du porte balai.

Selon un mode de réalisation de l'invention, l'élément de connexion comporte une partie élastique avec une première extrémité fixée à la carte et une deuxième extrémité configurée pour recevoir au moins une broche.

L'élasticité de l'élément de connexion permet d'absorber le désaxage lors de l'assemblage du connecteur.

Selon un mode de réalisation de l'invention, la deuxième extrémité de l'élément de connexion comporte au moins un logement dans lequel s'insère au moins une broche. Selon un mode de réalisation de l'invention, la deuxième extrémité comporte au moins une lyre dans lequel s'insère une broche.

Selon un mode de réalisation de l'invention, l'interconnecteur comporte au moins deux broches d'excitation et au moins deux logements ou lyres.

L'invention concerne également une machine électrique comportant un interconnecteur selon l'invention.

D'autres buts, caractéristiques et avantages de l'invention seront mieux compris et apparaîtront plus clairement à la lecture de la description faite, ci-après, en se référant aux figures annexées, données à titre d'exemple et dans lesquelles:
- la [Fig. 1] est une vue en coupe longitudinale de la connexion selon l'invention entre la machine électrique et la partie électronique,
- la [Fig. 2] est vue éclatée en élévation de l'interconnecteur selon l'invention,
- la [Fig. 3] est une vue assemblée en élévation de l'interconnecteur selon l'invention,
- la [Fig. 4] est une vue assemblée de dessus de l'interconnecteur selon l'invention,
- la [Fig. 5] est une représentation schématique de l'interconnecteur selon une autre mode de réalisation l'invention.

L'invention concerne un interconnecteur pour machine électrique. L'interconnexion est réalisée entre la partie machine 20 et l'ensemble électronique 30.

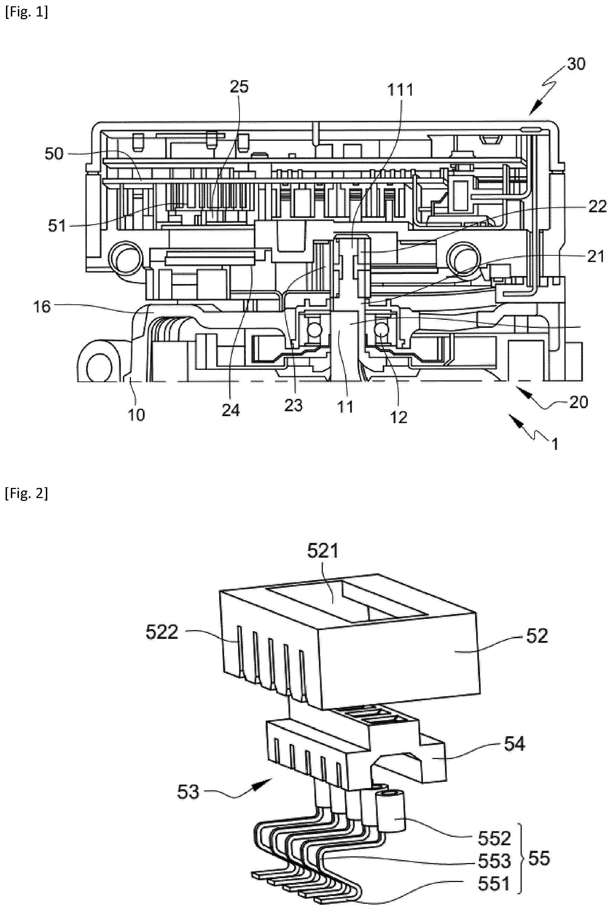

La [Fig. 1] illustre une partie de la machine 1 électrique concernant l'invention.

La machine 1 électrique est par exemple une machine 1 électrique tournante. Par exemple, la machine 1 électrique tournantes est du type générateur, alternateur, alterno-démarreurs, dont les tensions sont comprises entre 10 et 60V, et par exemple sont égales ou supérieures à 48V.

Cette machine 1 électrique tournante transforme de l'énergie mécaniques en énergie électrique, en mode alternateur, et peut fonctionner en mode moteur pour transformer de l'énergie électrique en énergie mécaniques. La machine 1 électrique tournante comporte un carter 10. A l'intérieur de ce carter 10, est disposé un arbre 11, un rotor non illustré solidaire en rotation de l'arbre 11 et un stator non illustré entourant le rotor. Le mouvement de rotation du rotor se fait autour d'un axe X. Dans la suite de la description, les dénominations axiales, radiales, extérieures et intérieures se réfèrent à l'axe X traversant en son centre l'arbre 11. La direction axiale correspond à l'axe X alors que les orientations radiales correspondent à des plans concourants, et notamment perpendiculaires, à l'axe X.

Dans cet exemple, le carter 10 comporte au moins un palier arrière 16 de forme creuse et portant, centralement un roulement à billes 12 pour le montage a rotation de l'arbre 11. Selon un mode de réalisation de l'invention, l'extrémité arrière 111 de l'arbre 11 porte un collecteur 22. Ce collecteur 22 comporte un corps réalisé en matériau électriquement isolant et des bagues collectrices 21 surmoulées dans ledit corps. Les bagues collectrices 21 ont une forme annulaire et sont entrainées en rotation avec le rotor.

Dans le cadre de l'invention, des balais 23 appartenant à un porte-balai 24 sont disposés de façon à frotter sur les bagues collectrices 21. Le porte-balai 24 est relié électriquement à l'ensemble électronique 30 pilotant la tension appliquée aux balais.

Le porte-balai 24 est monté, sur le palier arrière 16, autour du collecteur 22 qui est monte a une extrémité arrière de l'arbre 11. L'ensemble électronique 30 est également monte sur le palier arrière 16 et comporte un logement dans lequel le collecteur 22 et le porte-balai 24 viennent s'insérer au moins partiellement avec un jeu de montage. Le porte-balai 24 a deux balais 23. Chaque balai 23 s'étend dans une direction radiale par rapport à l'axe X et présente une face interne et une face externe opposées radialement, la face interne étant en contact avec la bague collectrice 21.

Selon un mode de réalisation de l'invention, l'ensemble électronique 30 comporte une carte 50 de circuit imprimé également appelée PCB (pour Print Cart Board selon la terminologie anglaise).

Dans le cadre de l'invention, la connexion entre la partie machine 20 et l'ensemble électronique 30 se fait via au moins une broche 25. Plus précisément, c'est le porte balai 24 qui comporte au moins une broche verticale 25, également appelés pin. Cette broche 25 permet la liaison entre le porte balai 24 et la carte 50 de circuit imprimé.

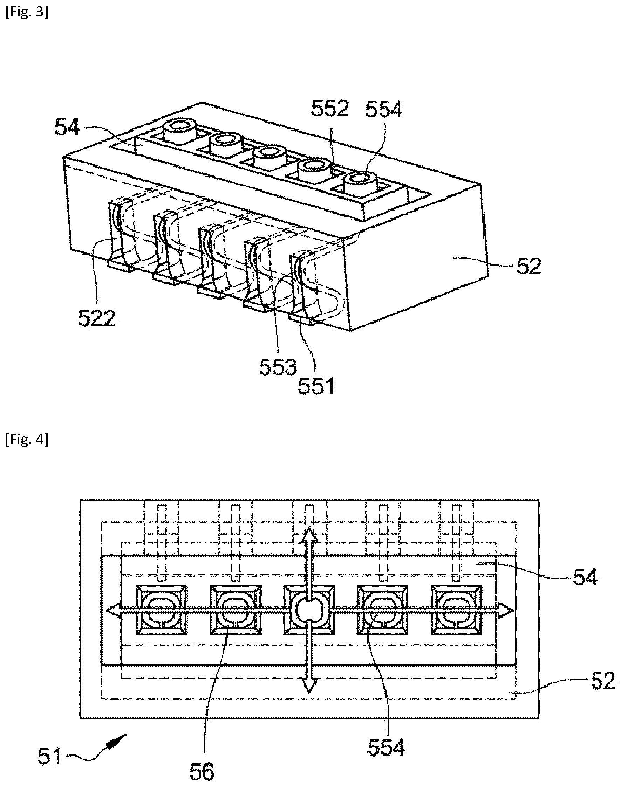

Pour cela, dans le cadre de l'invention, l'ensemble électronique 30 comporte un connecteur 51 illustré [Fig. 2] [Fig. 3] [Fig. 4] configuré pour recevoir la broche 25 de la partie machine 20. Plus précisément c'est la carte 50 de circuit imprimé qui comporte un connecteur 51 configuré pour recevoir la broche 25 du porte balai. Le connecteur 51 est fixé à la carte 50 par collage.

Selon un mode de réalisation de l'invention, le connecteur 51 comporte deux parties 52, 53.

Une première 52 partie est fixée sur la carte 50 de circuit imprimé de façon à être en vis à vis avec les broches du porte balai 24.

Une deuxième 53 partie mobile est insérée dans la première 52 partie de façon à être en contact d'une part avec la carte 50 de circuit imprimé et d'autre part avec les broches 25 du porte balai 24. Cette partie 53 est mobile.

Le fait que la deuxième partie 53 soit mobile permet d'ajuster et optimiser l'assemblage des deux parties.

Selon un mode de réalisation de l'invention, la première 52 partie à la forme d'un parallélépipède rectangle ou carré dans lequel est creusée une ouverture 521 débouchant sur deux faces opposées de la première 52 partie.

Selon un mode de réalisation de l'invention, la première 52 partie est fixée sur la carte 50 par une face comportant une ouverture.

Selon un mode de réalisation de l'invention, la fixation de la première 52 partie sur la carte 50 est faite par collage.

Selon un mode de réalisation de l'invention, la deuxième 53 partie visible entièrement [Fig. 2] est formée d'un socle 54 dans lequel est inséré au moins un élément 55 de connexion dans lequel est insérée au moins un broche 25 du porte balai 24. Le socle 54 est inséré dans l'ouverture 521 de la première 52 partie.

L'élément 55 de connexion de la deuxième 53 partie est configuré de façon à être en contact d'une part avec la carte 50 de circuit imprimé et d'autre part avec au moins une broche 25 du porte balai 24.

L'élément 55 de connexion comporte une partie élastique avec une première 551 extrémité fixée à la carte 50 et une deuxième extrémité 552configurée pour recevoir au moins une broche 25. C'est-à-dire que l'élément 55 de connexion traverse le socle 54 de part et d'autre.

Selon un mode de réalisation de l'invention, la première 551 extrémité de l'élément 55 de connexion est fixée par brasage à la carte 50.

Selon un mode de réalisation de l'invention, la partie élastique de l'élément de connexion est obtenue par une forme en S. L'extrémité du S est fixée à la carte. Le deuxième retour 553 du S est inséré dans un évidemment 522 formé dans la première 52 partie du connecteur 51.

L'élasticité de l'élément de connexion permet d'absorber le désaxage lors de l'assemblage du connecteur.

L'élasticité de l'élément de connexion associée à la mobilité de la deuxième partie 53 mobile permet d'optimiser l'assemblage de l'interconnecteur 51.

Selon un mode de réalisation de l'invention, la deuxième extrémité 552 de l'élément 55 de connexion est configurée pour maximiser le contact entre la deuxième extrémité 552 et la broche 25.

Selon un mode de réalisation de l'invention, la deuxième extrémité 552 de l'élément 55 de connexion comporte au moins un logement 554 dans lequel s'insère au moins une broche 25.

Selon un mode de réalisation de l'invention, le logement 554 a une forme carrée. Cela évite la perte de contact entre le logement et la broche lors des vibrations subies par le connecteur.

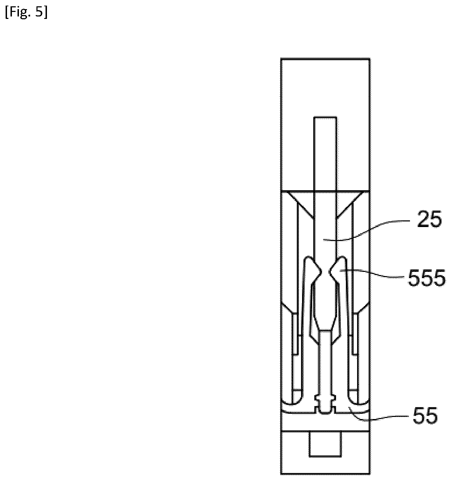

Selon un autre mode de réalisation de l'invention illustré [Fig. 5], la deuxième 552 extrémité comporte au moins une lyre 555 dans lequel s'insère une broche 25. Selon ce mode de réalisation, la lyre 555 est configurée pour que l'effort d'insertion soit supérieur à la déformation du connecteur due aux vibrations. Cela évite la perte de contact entre la lyre et la broche lors des vibrations subies par le connecteur.

La deuxième 552 extrémité comporte au niveau des ouvertures du logement ou de la lyre des chanfreins 56. Ces chanfreins 56 permettent de guider la broche 25

Selon un mode de réalisation de l'invention, le revêtement de l'extrémité de l'élément de connexion recevant la broche et de la broche est choisi pour résister à la corrosion. Selon un mode de réalisation de l'invention, la broche est une broche d'excitation, l'interconnecteur comporte alors au moins deux broches 25 d'excitation et au moins deux logements 554.

Selon un mode de réalisation de l'invention, la broche est une broche d'excitation, l'interconnecteur comporte alors au moins deux broches 25 d'excitation et au moins deux ou quatre lyres 555.

Un tel connecteur limite la perte de surface disponible sur la carte 50 en limitant la surface utilisée par le connecteur et en évitant la formation d'un trou de passage pour un outil de vissage.

La présente invention concerne également une machine électrique comportant un tel interconnecteur.

La portée de la présente invention ne se limite pas aux détails donnés ci-dessus et permet des modes de réalisation sous de nombreuses autres formes spécifiques sans s'éloigner du domaine d'application de l'invention. Par conséquent, les présents modes de réalisation doivent être considérés à titre d'illustration, et peuvent être modifiés sans toutefois sortir de la portée définie par les revendications.

## Revendications

1. Interconnecteur (51, 25) pour machine électrique configuré pour réaliser la connexion électrique entre une partie machine et un ensemble électronique (30) de la machine électrique comportant une carte (50) de circuit imprimé,
**caractérisé en ce que** l'interconnecteur (51, 25) est formé par un connecteur (51) de l'ensemble électronique (30) configuré pour recevoir au moins une broche (25) de la partie machine.

2. Interconnecteur (51, 25) pour machine électrique selon la revendications 1, dans lequel l'interconnecteur comporte une partie mobile.

3. Interconnecteur (51, 25) pour machine électrique selon une des revendications 1 ou 2, dans lequel la broche (25) est portée par un porte (24) balai de la partie machine électrique et/ou le connecteur (51) est fixé à la carte (50) de circuit imprimé par collage.

4. Interconnecteur (51, 25) pour machine électrique selon une des revendications 1 à 3, dans lequel le connecteur (51) comporte deux parties (52, 53), une première 52 partie est fixée sur la carte 50 de circuit imprimé de façon à être en vis à vis avec une broche (25) du porte balai (24), une deuxième (53) partie est insérée dans la première (52) partie de façon à être en contact d'une part avec la carte (50) de circuit imprimé et d'autre part avec une broche (25) du porte balai (24).

5. Interconnecteur (51, 25) pour machine électrique selon une des revendications 1 à 4, dans lequel la deuxième (53) partie est formé d'un socle (54) dans lequel est inséré au moins un élément (55) de connexion configuré de façon à être en contact d'une part avec la carte (50) de circuit imprimé et d'autre part avec au moins une broche (25) du porte balai (24).

6. Interconnecteur (51, 25) pour machine électrique selon la revendication 5, dans lequel l'élément (55) de connexion comporte une partie élastique avec une première (551) extrémité fixée à la carte (50) et une deuxième extrémité (552) configurée pour recevoir au moins une broche (25).

7. Interconnecteur (51, 25) pour machine électrique selon la revendication 6, dans lequel la deuxième extrémité (552) de l'élément (55) de connexion est configurée pour maximiser le contact entre la deuxième extrémité (552) et la broche (25).

8. Interconnecteur (51, 25) pour machine électrique selon une des revendications 6 et 7, dans lequel la deuxième extrémité (552) de l'élément (55) de connexion comporte au moins un logement (554) au moins une lyre (555) dans lequel s'insère au moins une broche (25).

9. Interconnecteur (51, 25) pour machine électrique selon une des revendications 1 à 8, comportant au moins deux broches (25) d'excitation et au moins deux logements (554) ou lyres (555).

10. Machine électrique comportant un interconnecteur selon une des revendications 1 à 9.
